# EUROPÄISCHE PATENTSCHRIFT

(11) **EP 3 225 440 B1**
(45) Veröffentlichungstag und Bekanntmachung des Hinweises auf die Patenterteilung: **18.09.2019**
(21) Anmeldenummer: 17000458.4
(22) Anmeldetag: 21.03.2017
(51) Int. Cl.: B60H 1/24, B60T 13/26, B60H 1/00

(54) **NUTZFAHRZEUG, INSBESONDERE BUS, MIT EINEM FAHRZEUG-INNENRAUM FÜR PERSONEN**
COMMERCIAL VEHICLE, IN PARTICULAR A BUS, WITH A VEHICLE PASSENGER COMPARTMENT FOR PERSONS
VÉHICULE UTILITAIRE, EN PARTICULIER BUS, ÉQUIPÉ D'UN HABITACLE POUR LES PERSONNES

(30) Priorität: 31.03.2016 DE 102016003929
(43) Veröffentlichungstag der Anmeldung: 04.10.2017
(73) Patentinhaber: MAN Truck & Bus SE, 80995 München (DE)
(72) Erfinder: Ille, Thomas, 82223 Eichenau (DE); Bernath, Michael, 80637 München (DE)
(74) Vertreter: Liebl, Thomas

(56) Entgegenhaltungen:
- WO-A1-2011/036672
- DE-A1-102008 031 747
- JP-A- S6 047 720

## Beschreibung

Die Erfindung betrifft ein Nutzfahrzeug, insbesondere einen Bus, mit einem Fahrzeug-Innenraum für Personen, nach dem Oberbegriff des Anspruchs 1. Ferner betrifft die Erfindung ein Verfahren zur Frischluftversorgung nach dem Oberbegriff des Anspruchs 9.

Nutzfahrzeuge, insbesondere Busse, sind in allgemein bekannter Weise mit einer Innenraum-Frischluftversorgung ausgerüstet. Dennoch können im Fahrgastraum, insbesondere von Bussen durch einen ungleichmäßigen Luftaustausch Zonen mit veralteter Luft entstehen, die eine schlechte Luftqualität, mit zum Beispiel einen zu hohen CO₂-Gehalt aufweisen können. Eine hohe CO₂-Konzentration kann durch die Atemluft der Fahrgäste entstehen. Eine maximal zulässige CO₂-Konzentration und ein in Abhängigkeit der Fahrgastbelegung erforderlicher Mindest-Luftaustausch ist durch Vorschriften geregelt. Bekanntlich liegt der Bereich mit der schlechtesten Luftqualität, insbesondere mit dem höchsten CO₂-Gehalt in einem Businnenraum zwischen vorderen und hinteren Türen, gegebenenfalls auch in einem hinteren und/oder vorderen Businnenraumbereich. Mit einer üblichen Einrichtung zur Frischluftzufuhr, wird Frischluft nur in den Fahrzeuginnenraum gefördert, jedoch ein Zwangs-Luftaustausch - veraltete Luft gegen Frischluft - nicht oder nur vergleichsweise uneffektiv durchgeführt.

Ein gattungsgemäßes Nutzfahrzeug, insbesondere ein Bus, weist zudem eine Druckluftanlage auf, mittels der insbesondere eine Betriebsbremse, eine Luftfederung, eine Türschließeinrichtung, etc. betätigbar ist. Eine solche Druckluftanlage weist in einer allgemein bekannten Anordnung wenigstens einen Luftansaugstutzen mit nachgeordnetem Luftpresser und diesem nachgeordneten Druckluftbehälter auf.

Die DE 10 2008 031 747 A1 offenbart eine Vorrichtung zum Bereitstellen von aufbereiteter Luft zur Verwendung als Druckluft in einem pneumatisch betriebenen Bremssystem eines Fahrzeugs, bei dem mittels wenigstens eines Ansaugkanals Luft aus einer Umgebung des Fahrzeugs und mittels wenigstens eines weiteren Ansaugkanals Luft aus einem Inneren des Fahrzeugs, insbesondere aus einem Motorraum des Fahrzeugs, angesaugt wird.

Aufgabe der Erfindung ist es, bei einem gattungsgemäßen Nutzfahrzeug, insbesondere einem Bus, einen Zwangs-Luftaustausch im Fahrzeug-Innenraum mit einer effizienten Durchströmung mit Frischluft zur Verbesserung der Luftqualität zu erzeugen. Ferner ist es Aufgabe der Erfindung ein geeignetes Verfahren zur Frischluftversorgung zur Verfügung zu stellen.

Diese Aufgabe wird gelöst mit den Merkmalen der unabhängigen Ansprüche. Vorteilhafte Ausgestaltungen sind Gegenstand der Unteransprüche.

Gemäß Anspruch 1 ist ein Nutzfahrzeug, insbesondere ein Bus, mit einem, einen Fahrgastraum bildenden Fahrzeug-Innenraum für Personen vorgesehen. Weiter ist eine Innenraum-Frischluftversorgungseinrichtung und eine Druckluftanlage vorgesehen, die wenigstens einen Luftansaugstutzen mit einem nachgeordneten Luftpresser und diesem nachgeordneten Druckluftbehälter aufweist. Erfindungsgemäß ist vorgesehen, dass der wenigstens eine Luftansaugstutzen der Druckluftanlage als Innenraum-Ansaugstutzen im Fahrzeuginnenraum zur Ansaugung von Innenraumluft angeordnet ist. Damit kann aus dem Fahrzeuginnenraum über den Innenraum-Luftansaugstutzen mit dem Luftpresser veraltete Innenraumluft in den Druckluftbehälter abgesaugt werden.

Mit der Innenraum-Frischluftversorgung und ihrer Einrichtung zur Frischluftzufuhr mit einer Strömungsverbindung zwischen Fahrzeug-Innenraum und Außenumgebung wird die aus dem Fahrzeuginnenraum mit der Druckluftanlage abgesaugte veraltete Luft in einem Zwangs-Luftaustausch nachgefördert und ausgeglichen. Dazu kann beispielhaft von folgenden Gegebenheiten ausgegangen werden:
Ein gebräuchlicher Luftpresser kann zwischen ca. 0,5 bis 0,8 m³ Luft pro Minute fördern, wodurch ein effektiver Zwangs-Luftaustausch gewährleistet ist. Auch wenn bei künftigen, verbrauchsoptimierten Auslegungen von Luftpressern nicht mehr von einer dauerhaften, sondern von einer bedarfsgerechten Förderung auszugehen ist, passt dennoch die Größenordnung des Luftvolumenstroms relativ gut zu einem erforderlichen Luftaustausch für den Fahrzeug-Innenraum, insbesondere weil nur die Volumina veralteter Luft mit hoher CO₂-Konzentration zwangsausgetauscht werden müssen.

Ein solcher Zwangs-Luftaustausch im Fahrzeug-Innenraum ist besonders vorteilhaft bei einem Stadtbus sowie einem Reisebus durchführbar, kann jedoch vorteilhaft auch bei einem Lastkraftwagen eingesetzt werden.

Bisher wird die für die Druckluftanlage erforderliche Luft mit einem Außenluft-Ansaugstutzen aus der Außenumgebung angesaugt. Zweckmäßig wird auch weiter zusammen mit der erfindungsgemäßen Innenraum-Luftabsaugung im Wechsel oder in einem Mischungsverhältnis eine Außenluftansaugung in Abhängigkeit von diversen Innenraumparametern durchgeführt. Dazu wird konkret der wenigstens eine Innenraum-Luftansaugstutzen und der wenigstens eine Außenluft-Ansaugstutzen mittels Luftleitungen mit einer durch eine Steuereinrichtung steuerbaren Luftverteilereinrichtung verbunden, der dem Luftpresser nachgeordnet ist.

Dazu kann die Luftverteilereinrichtung in der Art eines Schaltventils ausgebildet sein, mit dem je nach Schaltstellung bei eingeschaltetem Luftpresser Luft über den Innenraum-Luftansaugstutzen oder über dem Außenluft-Ansaugstutzen ansaugbar ist. Zusätzlich oder alternativ zu einer solchen Ein-Aus-Schaltung der Innenraum-Luftabsaugung kann die Luftverteileinrichtung mit einem Regelventil die beiden Luftströme kontinuierlich aufteilen, so dass gleichzeitig mit der Druckluftanlage eine Außenluft-Ansaugung und Innenraum-Luftansaugung mit einem variierbaren Verhältnis durchführbar ist.

Dazu weist in einer Weiterbildung die Steuereinrichtung wenigstens einen Luftqualitäts-Sensor im Fahrzeug-Innenraum auf als Ist-Wert-Sensor für die Luftqualität. Mit einem Algorithmus zur Einhaltung einer Soll-Luftqualität oder wenigstens einer Mindest-Soll-Luftqualität wird entsprechend die Luftverteilereinrichtung für eine komplette oder zumindest teilweise Öffnung des Strömungswegs vom Innenraum-Luftansaugstutzen mit Einschaltung des Luftpressers geregelt und/oder gesteuert. Damit wird ein effektiver und bedarfsangepasster Zwangs-Luftaustausch durchführbar.

Bezüglich der Anordnung werden zweckmäßig ein oder vorzugsweise mehrere Innenraum-Luftansaugstutzen, gegebenenfalls mit lagezugeordnetem Luftqualitäts-Sensoren, im Fahrzeug-Innenraum an Stelle und/oder Zone angeordnet, in bzw. an der verstärkt "veraltete Luft" mit schlechter Luftqualität entsteht, zum Beispiel durch hohen CO₂-Gehalt aus der Atemluft von Fahrgästen. Insbesondere bei Reisebussen oder Stadtbussen befinden sich diese Innenraumbereiche zwischen vorderen und hinteren Türen und/oder in weniger durchlüfteten hinteren und/oder vorderen Innenraumbereichen. Damit wird ein effektiver und optimierter Zwangs-Luftaustausch gezielt in kritischen Innenraumbereichen mit schlechter Luftqualität durchführbar.

Für einen energieeffizienten Einsatz des erfindungsgemäßen Zwangs-Luftaustausches kann es zweckmäßig sein, den Strömungsweg vom Innenraum-Luftansaugstutzen, insbesondere mittels der Steuereinrichtung, in Abhängigkeit erfassbarer Außenparameter abschaltbar zu machen. Insbesondere kann bei hohen Außentemperaturen mit einer eingeschalteten Klimaanlage zur energieintensiven Kühlung der Innenraumluft und ebenso bei tiefen Außentemperaturen und einer eingeschalteten energieintensiven Heizungsanlage zur Heizung der Innenraumluft die erfindungsgemäße Innenraumluftabsaugung zumindest zeitweise und/oder bedarfsweise geregelt abgeschaltet werden.

Beim erfindungsgemäßen Zwangs-Luftaustausch ist auf schallschutztechnische Maßnahmen zu achten: dabei sind durch eine geeignete Dimensionierung und Formgebung des wenigstens einen Innenraum-Luftansaugstutzens, die Einströmgeräusche zu minimieren. Auch mögliche Geräusch-Rückkoppelungen vom Luftpresser zum Innenraum-Luftansaugstutzen sind zu berücksichtigen und können durch strömungsmäßig vor dem Luftpresser angebrachte Schallschutzelemente und/oder Luftfilter minimiert werden. Da zudem die vom FahrzeugInnenraum abgesaugte Luft tendenziell feuchter als Außenluft ist, ist zudem auf eine ausreichende Dimensionierung einer Lufttrocknung zu achten.

Weiter wird ein entsprechendes Verfahren für einen Zwangs-Luftaustausch beansprucht.

Anhand einer schematischen Zeichnung wird die Erfindung beispielhaft näher erläutert.

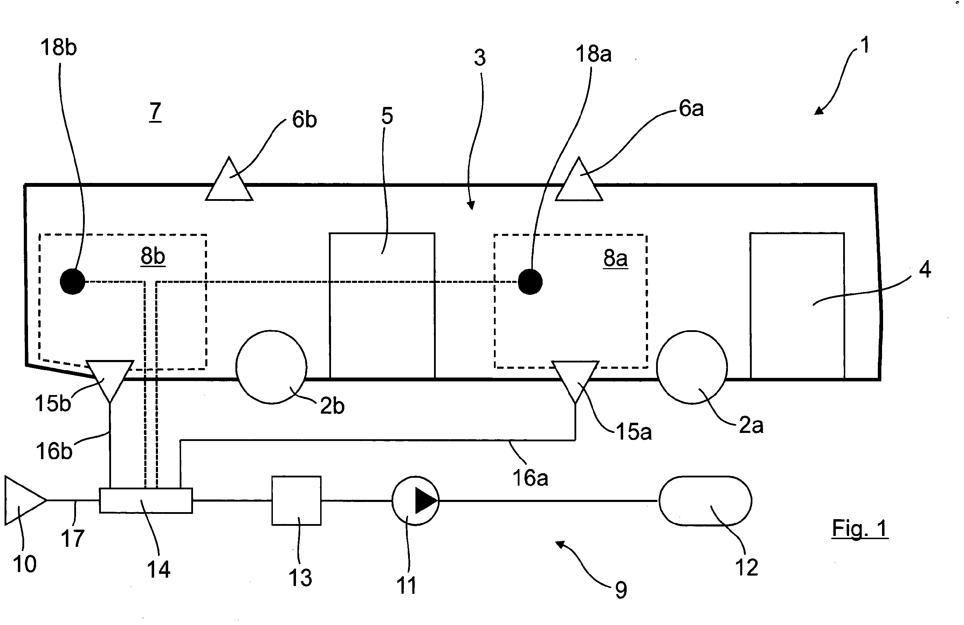

Die einzige Figur zeigt schematisch einen Stadtbus 1 in einer Seitenansicht mit seinen Rädern 2a, 2b, einem Innenraum 3 mit einer vorderen Tür 4 und einer mittleren Tür 5. Im Dachbereich sind zwei in Längsrichtung beabstandete Frischluftzufuhr-Elemente 6a, 6b für eine Strömungsverbindung zwischen dem Innenraum 3 und der Außenumgebung 4.

In einem ersten Innenraumbereich 8a zwischen Türen 4 und 5 und in einem hinteren Innenraumbereich 8b (umgrenzt durch strichlierte Linien) entstehen durch einen ungleichmäßigen Luftaustausch Zonen mit veralteter Luft und schlechter Luftqualität mit hohem CO₂-Gehalt, insbesondere bei hoher Fahrgastbelegung.

Der Stadtbus 1 weist weiter eine übliche Druckluftanlage 9 auf, mit einem Außenluft-Ansaugstutzen 10, einem Luftpresser 11 und einem nachgeordneten Druckluftbehälter 12. Dem Luftpresser 11 vorgeschaltet ist ein Luftfilter/Schallschutzelement 13 sowie eine steuerbare Luftverteilereinrichtung, hier lediglich beispielhaft konkret als 2-Wege-Schaltventil 14 ausgebildet.

In den beiden Innenraumbereichen 8a, 8b sind bodenseitig jeweils Innenraum-Luftansaugstutzen 15a und 15b angebracht, die jeweils mittels Luftströmungsleitungen 16a, 16b mit dem Mehrwegeventil bzw. hier 2-Wege-Schaltventil 14 verbunden sind. Zudem ist der Außenluft-Ansaugstutzen 10 mit einer Luftströmungsleitung 17 am Schaltventil 14 angeschlossen.

In den Innenraumbereichen 8a und 8b sind zudem Luftqualitäts-Sensoren 18a, 18b als Ist-Wert-Sensoren für die dortige Luftqualität angebracht.

Für einen Zwangs-Luftaustausch über die Frischluftzufuhrelemente 6a, 6b kann mittels der Druckluftanlage 9 bei durch die Luftqualitäts-Sensoren 18a, 18b erfasster schlechter Luftqualität Luft aus den Innenraumbereich 8a, 8b über die Innenraum-Ansaugstutzen 15a, 15b abgesaugt werden. Dazu wird mit einer Steuereinrichtung das 2-Wege-Schaltventil 14 (bei eingeschaltetem Luftpresser 11) so geschaltet, dass die Luftwege über die Strömungsleitungen 16a, 16b geöffnet sind und der Luftweg über die Strömungsleitung geschlossen ist. Je nach Auslegung können gegebenenfalls auch nur ein Strömungsweg über eine Strömungsleitung 16a oder 16b freigegeben werden oder es kann auch gegebenenfalls mit einem Regelventil ein Luftmischungsverhältnis von angesaugter Frischluft über den Außenluft-Ansaugstutzen 10 und aus dem Innenraum abgesaugter Innenraumluft über den Innenraum-Ansaugstutzen 15a und/oder 15b in Abhängigkeit der Signale der Luftqualitäts-Sensoren 18a und 18b sowie gegebenenfalls weiterer Parameter eingestellt werden.

### Bezugszeichenliste

- 1: Stadtbus
- 2a, b: Räder
- 3: Innenraum
- 4: vordere Tür
- 5: mittlere Tür
- 6a, b: Frischluftzufuhr-Elemente
- 7: Außenumgebung
- 8a, b: Innenraumbereich
- 9: Druckluftanlage
- 10: Außenluft-Ansaugstutzen
- 11: Luftpresser
- 12: Druckluftbehälter
- 13: Luftfilter/Schallschutzelement
- 14: 2-Wege-Schaltventil
- 15a, b: Innenraum-Ansaugstutzen
- 16a, b: Luftströmungsleitung
- 17: Luftströmungsleitung
- 18a, b: Luftqualitäts-Sensoren

## Patentansprüche

1. Nutzfahrzeug, insbesondere Bus (1), mit einem, einen Fahrgastraum bildenden Fahrzeug-Innenraum (3) für Personen, mit einer Innenraum-Frischluftversorgung und mit einer Druckluftanlage (9), die wenigstens einen Luftansaugstutzen mit einem nachgeordneten Luftpresser (11) und diesem nachgeordneten Druckluftbehälter (12) aufweist,
**dadurch gekennzeichnet,**
**dass** der wenigstens eine Luftansaugstutzen der Druckluftanlage (9) als wenigstens ein Innenraum-Luftansaugstutzen (15a, 15b) im Fahrzeug-Innenraum (3) zur Ansaugung von Innenraumluft angeordnet ist.

2. Nutzfahrzeug nach Anspruch 1, **dadurch gekennzeichnet,**
**dass** die Innenraum-Frischluftversorgung wenigstens eine Einrichtung zur Frischluftzufuhr (6a, 6b) mit einer Strömungsverbindung zwischen Fahrzeug-Innenraum (3) und Außenumgebung (7) aufweist, dergestalt dass die über den Innenraum-Luftansaugstutzen (15a, 15b) aus dem Fahrzeug-Innenraum abgesaugte Luft in einem Zwangs-Luftaustausch über die Frischluftzufuhr (6a, 6b) nachförderbar und ausgleichbar ist.

3. Nutzfahrzeug nach Anspruch 1 oder Anspruch 2, **dadurch gekennzeichnet,**
**dass** wenigstens ein Luftansaugstutzen der Druckluftanlage (9) als Außenluft-Ansaugstutzen (10) zur Ansaugung von Außenluft aus der Außenumgebung (7) vorgesehen ist, und
**dass** der wenigstens eine Innenraum-Luftansaugstutzen (15a, 15b) und der wenigstens eine Außenluft-Ansaugstutzen (10) mittels Luftleitungen (16a, 16b, 17) mit einer durch eine Steuereinrichtung steuerbaren Luftverteilereinrichtung (14) verbunden sind.

4. Nutzahrzeug nach Anspruch 3, **dadurch gekennzeichnet,**
**dass** die Luftverteilereinrichtung (14) in der Art eines Zwei- oder Mehrwege-Schaltventils ausgebildet ist, mit dem je nach Schaltstellung bei eingeschaltetem Luftpresser (11) Luft über den wenigstens einen Innenraum-Luftansaugstutzen (15a, 15b) oder über den Außenluft-Ansaugstutzen (10) ansaugbar ist, oder
**dass** die Luftverteilereinrichtung (14) mit einem Regelventil kontinuierlich und/oder in Stufen für eine Aufteilung der beiden Luftströme vom Innenraum-Luftansaugstutzen (15a, 15b) und vom Außenluft-Ansaugstutzen (10) für ein variables Luftzufuhrverhältnis zum Luftpresser (11) gesteuert verstellbar ist.

5. Nutzfahrzeug nach Anspruch 3 oder Anspruch 4, **dadurch gekennzeichnet,**
**dass** die Steuereinrichtung wenigstens einen Luftqualitäts-Sensor (18a, 18b) im Fahrzeug-Innenraum (3) aufweist als Ist-Wert-Sensor für die Luftqualität, und
**dass** mit einem Algorithmus zur Einhaltung einer Soll-Luftqualität die Luftverteilereinrichtung (14) für eine komplette oder zumindest teilweise Öffnung des Strömungswegs zum Innenraum-Luftansaugstutzen (15a, 15b) mit zugeordneter Einschaltung des Luftpressers (11) regelbar und/oder steuerbar ist.

6. Nutzfahrzeug nach einem der vorhergehenden Ansprüche, **dadurch gekennzeichnet,**
**dass** wenigstens ein, vorzugsweise mehrere, Innenraum-Luftansaugstutzen (15a, 15b), gegebenenfalls mit lagezugeordneten Luftqualitäts-Sensoren (18a, 18b), im Fahrzeug-Innenraum (3) an wenigstens einer Stelle und/oder Zone (8a, 8b) angeordnet ist, an der Luft mit schlechter Luftqualität entsteht, insbesondere durch hohen CO₂-Gehalt aus der Atemluft von Fahrgästen und/oder bei einem Reisebus oder Stadtbus in Innenraumbereichen (8a) zwischen Türen (4, 5) und/oder in hinteren (8b) und/oder vorderen Innenraumbereichen entsteht.

7. Nutzfahrzeug nach einem der vorhergehenden Ansprüche, **dadurch gekennzeichnet,**
**dass** der Strömungsweg vom Innenraum-Luftansaugstutzen (15a, 15b), insbesondere mittels der Steuereinrichtung, in Abhängigkeit erfassbarer Außenparameter abschaltbar ist, vorzugsweise bei hohen Außentemperaturen und einer eingeschalteten Klimaanlage zur Kühlung der Innenraumluft oder bei tiefen Außentemperaturen und einer eingeschalteten Heizungsanlage zur Heizung der Innenraumluft.

8. Nutzfahrzeug nach einem der vorhergehenden Ansprüche, **dadurch gekennzeichnet,**
**dass** strömungsmäßig vor dem Luftpresser (11) ein Schallschutzelement (13) und/oder ein Luftfilter und/oder eine Lufttrocknung angebracht ist oder sind.

9. Verfahren zur Frischluftversorgung für ein Nutzfahrzeug nach einem der vorhergehenden Ansprüche, wobei das Nutzfahrzeug einen, einen Fahrgastraum bildenden Fahrzeug-Innenraum (3) für Personen, eine Innenraum-Frischluftversorgung und eine Druckluftanlage (9) aufweist, wobei Druckluftanlage (9) wenigstens einen Luftansaugstutzen mit einem nachgeordneten Luftpresser (11) und diesem nachgeordneten Druckluftbehälter (12) aufweist, **dadurch gekennzeichnet, dass** der wenigstens eine Luftansaugstutzen durch wenigstens einen Innenraum-Luftansaugstutzen (15a, 15b) gebildet ist, mittels dem Innenraumluft für einen Zwangs-Luftaustausch von der Druckluftanlage (9) aus dem Fahrzeug-Innenraum gesteuert abgesaugt wird.

## Claims

1. Commercial vehicle, in particular a bus (1), having a passenger compartment-forming vehicle interior (3) for persons, having an interior fresh-air supply and having a compressed-air system (9) which has at least one air intake with a downstream air compressor (11) and a compressed-air tank (12) arranged downstream of the latter,
**characterized**
**in that** the at least one air intake of the compressed-air system (9) is arranged as at least one interior air intake (15a, 15b) in the vehicle interior (3) for drawing in interior air.

2. Commercial vehicle according to Claim 1, **characterized**
**in that** the interior fresh-air supply has at least one device for fresh-air supply (6a, 6b) with a flow connection between vehicle interior (3) and external surroundings (7) in such a way that the air sucked out of the vehicle interior via the interior air intake (15a, 15b) can be resupplied and compensated for in a forced air exchange via the fresh-air supply (6a, 6b).

3. Commercial vehicle according to Claim 1 or Claim 2, **characterized**
**in that** at least one air intake of the compressed-air system (9) is provided as an external-air intake (10) for drawing external air from the external surroundings (7), and
**in that** the at least one interior air intake (15a, 15b) and the at least one external-air intake (10) are connected by means of air lines (16a, 16b, 17) to an air distribution device (14) which can be controlled by a control device.

4. Commercial vehicle according to Claim 3, **characterized**
**in that** the air distribution device (14) is designed in the manner of a two- or multi-way switching valve by means of which, depending on the switching position, and with the air compressor (11) activated, air can be drawn in via the at least one interior air intake (15a, 15b) or via the external-air intake (10), or
**in that** the air distribution device (14) can be adjusted in a controlled manner by a regulating valve in a continuous manner and/or in stages for distributing the two air flows from the interior air intake (15a, 15b) and from the external-air intake (10) for a variable air supply ratio to the air compressor (11).

5. Commercial vehicle according to Claim 3 or Claim 4, **characterized**
**in that** the control device has at least one air-quality sensor (18a, 18b) in the vehicle interior (3) as an actual value sensor for the air quality, and
**in that** the air distribution device (14) can be regulated and/or controlled, with an algorithm for maintaining a desired air quality, for a complete or at least partial opening of the flow path to the interior air intake (15a, 15b) with associated activation of the air compressor (11).

6. Commercial vehicle according to one of the preceding claims, **characterized**
**in that** at least one, preferably a plurality of, interior air intakes (15a, 15b), optionally with positionally assigned air-quality sensors (18a, 18b), is/are arranged in the vehicle interior (3) at at least one point and/or zone (8a, 8b) at which air of poor air quality arises, in particular arising as a result of high CO₂ content from the breathing air of passengers and/or, in the case of a coach or city bus, arising in interior regions (8a) between doors (4, 5) and/or in rear (8b) and/or front interior regions.

7. Commercial vehicle according to one of the preceding claims, **characterized**
**in that** the flow path from the interior air intake (15a, 15b) can be switched off, in particular by means of the control device, in dependence on detectable external parameters, preferably at high external temperatures and with an activated air-conditioning system for cooling the interior air or at low external temperatures and with an activated heating system for heating the interior air.

8. Commercial vehicle according to one of the preceding claims, **characterized**
**in that** a sound protection element (13) and/or an air filter and/or an air dryer are/is mounted upstream of the air compressor (11) in terms of flow.

9. Method for the fresh-air supply for a commercial vehicle according to one of the preceding claims, wherein the commercial vehicle has a passenger compartment-forming vehicle interior (3) for persons, an interior fresh-air supply and a compressed-air system (9), wherein the compressed-air system (9) has at least one air intake with a downstream air compressor (11) and a compressed-air tank (12) arranged downstream of the latter, **characterized in that** the at least one air intake is formed by at least one interior air intake (15a, 15b) by means of which interior air is sucked in a controlled manner out of the vehicle interior for a forced air exchange by the compressed-air system (9).

## Revendications

1. Véhicule utilitaire, en particulier bus (1), avec un espace intérieur de véhicule (3) formant un habitacle pour des personnes, avec une alimentation en air frais de l'habitacle et avec un système d'air comprimé (9), qui présente au moins un tuyau d'aspiration d'air suivi par un compresseur d'air (11) et avec un réservoir d'air comprimé (12) qui suit ce dernier,
**caractérisé en ce que** ledit au moins un tuyau d'aspiration d'air du système d'air comprimé (9) est disposé, en tant que tuyau d'aspiration d'air de l'habitacle (15a, 15b), dans l'habitacle (3) du véhicule pour l'aspiration d'air de l'habitacle.

2. Véhicule utilitaire selon la revendication 1, **caractérisé en ce que** l'alimentation en air frais de l'habitacle présente au moins un dispositif pour l'amenée d'air frais (6a, 6b) avec une liaison d'écoulement entre l'habitacle du véhicule (3) et l'atmosphère extérieure (7), de telle manière que l'air aspiré hors de l'habitacle du véhicule par le tuyau d'aspiration d'air de l'habitacle (15a, 15b) puisse être remplacé et compensé dans un échange d'air forcé par l'apport d'air frais (6a, 6b).

3. Véhicule utilitaire selon une revendication 1 ou 2, **caractérisé en ce qu'**il est prévu au moins un tuyau d'aspiration d'air du système d'air comprimé (9) comme tuyau d'aspiration d'air extérieur (10) pour l'aspiration d'air extérieur depuis l'atmosphère extérieure (7), et **en ce que** ledit au moins un tuyau d'aspiration d'air de l'habitacle (15a, 15b) et ledit au moins un tuyau d'aspiration d'air extérieur (10) sont reliés par des conduites d'air (16a, 16b, 17) à un dispositif de distribution d'air (14) pouvant être commandé par un dispositif de commande.

4. Véhicule utilitaire selon la revendication 3, **caractérisé en ce que** le dispositif de distribution d'air (14) est réalisé à la manière d'une soupape de commutation à deux ou à plusieurs voies, avec laquelle selon la position de commutation lorsque le compresseur d'air (11) est branché de l'air peut être aspiré par ledit au moins un tuyau d'aspiration d'air de l'habitacle (15a, 15b) ou par ledit au moins un tuyau d'aspiration d'air extérieur (10), ou **en ce que** le dispositif de distribution d'air (14) peut être réglé de façon commandée par une soupape de réglage, en continu ou par paliers, pour un partage des deux flux d'air du tuyau d'aspiration d'air de l'habitacle (15a, 15b) et du tuyau d'aspiration d'air extérieur (10) pour un rapport d'apport d'air variable au compresseur d'air (11).

5. Véhicule utilitaire selon la revendication 3 ou la revendication 4, **caractérisé en ce que** le dispositif de commande présente au moins un détecteur de la qualité de l'air (18a, 18b) dans l'habitacle du véhicule (3) comme détecteur de la valeur réelle de la qualité de l'air, et **en ce que** le dispositif de distribution d'air (14) peut être régulé et/ou commandé avec un algorithme pour le respect d'une qualité d'air de consigne en vue de l'ouverture complète ou au moins partielle du chemin d'écoulement vers le tuyau d'aspiration d'air de l'habitacle (15a, 15b) avec branchement associé du compresseur d'air (11).

6. Véhicule utilitaire selon l'une quelconque des revendications précédentes, **caractérisé en ce qu'**au moins un, de préférence plusieurs tuyau(x) d'aspiration d'air de l'habitacle (15a, 15b) éventuellement avec des détecteurs de la qualité de l'air (18a, 18b) mis en position, est/sont disposé(s) dans l'habitacle du véhicule (3) à au moins un endroit ou dans une zone (8a, 8b), où de l'air avec une mauvaise qualité d'air apparaît, en particulier à cause d'une haute teneur en CO₂ due à l'air expiré par les occupants et/ou apparaît dans un autocar ou un autobus dans des régions de l'habitacle (8a) entre des portes (4, 5) et/ou dans les régions arrière (8b) et/ou avant de l'habitacle.

7. Véhicule utilitaire selon l'une quelconque des revendications précédentes, **caractérisé en ce que** le chemin d'écoulement depuis le tuyau d'aspiration d'air de l'habitacle (15a, 15b) peut être coupé en particulier au moyen du dispositif de commande, en fonction de paramètres extérieurs détectables, de préférence dans le cas de températures extérieures élevées et d'une installation de climatisation activée pour le refroidissement de l'air intérieur ou dans le cas de températures extérieures basses et d'une installation de chauffage activée pour le chauffage de l'air intérieur.

8. Véhicule utilitaire selon l'une quelconque des revendications précédentes, **caractérisé en ce qu'**un élément d'insonorisation (13) et/ou un filtre à air et/ou un sécheur d'air est ou sont installé(s) dans l'écoulement avant le compresseur d'air (11).

9. Procédé d'alimentation en air frais pour un véhicule utilitaire selon l'une quelconque des revendications précédentes, dans lequel le véhicule utilitaire présente un espace intérieur de véhicule (3) formant un habitacle pour des personnes, une alimentation en air frais de l'habitacle et un système d'air comprimé (9), dans lequel le système d'air comprimé (9) présente au moins un tuyau d'aspiration d'air suivi par un compresseur d'air (11) et un réservoir d'air comprimé (12) qui suit ce dernier, **caractérisé en ce que** le tuyau d'aspiration d'air est formé par au moins un tuyau d'aspiration d'air de l'habitacle (15a, 15b), au moyen duquel on aspire de l'air de l'habitacle hors de l'habitacle du véhicule pour un échange d'air forcé par le système d'air comprimé (9).
